# EUROPÄISCHE PATENTSCHRIFT

(11) **EP 2 088 035 B1**
(45) Veröffentlichungstag und Bekanntmachung des Hinweises auf die Patenterteilung: **21.04.2010**
(21) Anmeldenummer: 08002141.3
(22) Anmeldetag: 06.02.2008
(51) Int. Cl.: B60R 13/10, B60R 13/00

(54) **Autokennzeichen mit Ergänzungsfläche**
Vehicle registration plate with additional space
Plaque d'immatriculation dotée d'une surface complémentaire

(43) Veröffentlichungstag der Anmeldung: 12.08.2009
(73) Patentinhaber: Marks, Werner, 40883 Ratingen (DE)
(72) Erfinder: Marks, Werner, 40883 Ratingen (DE)
(74) Vertreter: Schulte, Jörg

(56) Entgegenhaltungen:
- BE-A3- 1 010 531
- CA-A1- 2 305 859
- JP-A- 7 223 486
- US-A- 1 964 002
- US-A- 2 201 519
- US-A- 3 408 760

## Beschreibung

Die Erfindung betrifft ein Autokennzeichen in normierter und vorgeschriebener Form, Größe und Beschriftung, das direkt, vor allem aber über eine Unterlegplatte mit dem Fahrzeug über randseitige Befestigungsmittel lösbar verbunden ist, wobei mindestens eines der Befestigungsmittel zugleich auch zur Fixierung eines in sich biegesteif ausgebildeten Trägers mit einer Zusatz- oder Ergänzungsfläche dient.

Autokennzeichen oder Nummernschilder sind seit mehr als 2000 Jahren zumindest theoretisch bekannt. Schon römische Streitwagen wurden mit einer Art Nummernschild versehen, um sie einwandfrei auseinander halten zu können. Mit Hilfe heutiger Autokennzeichen soll das damit versehene Auto bzw. Fahrzeug seinem Besitzer einwandfrei zugeordnet werden. Dazu sind in Deutschland die Autokennzeichen zunächst einmal allgemein mit dem "D" für Deutschland und dem Sternenkreis für Europa gekennzeichnet. Die übrige Fläche ist für den den Ort bezeichnende Buchstaben oder Buchstabenfolgen und dann meist nach einem Bindestrich für eine spezielle Buchstaben- und Ziffernfolge für den Eigentümer des Kraftfahrzeuges bzw. Autos vorgesehen. Normiert und vorgeschrieben ist diese Form, um es sowohl dem Einzelnen wie insbesondere auch den Aufsichtsbehörden und der Polizei sicher zu ermöglichen, den jeweiligen Besitzer einwandfrei zu ermitteln. Von daher ist es nicht zulässig, auf der eigentlichen Nutzfläche der Kennzeichenplatte weitere Hinweise anzubringen. Im Rahmen der Fußballweltmeisterschaft in der Bundesrepublik Deutschland hat sich gezeigt, dass die Besitzer solcher Fahrzeuge durchaus ein Interesse daran haben, über den Anfangsbuchstaben des jeweiligen Staates hinaus auch dessen Nationalflagge mitzuführen. Darüber hinaus kann es interessant und wichtig sein, der Allgemeinheit den Lieblingsfußballverein oder Ähnliches kundzutun. Aus der DE 16 68 464 U1 ist es bekannt, dass Autokennzeichen oder Nummernschilder mit lichtreflektierenden Zahlen und Schriftzeichen versehen sind. Die DE 20 2005 007 342 U1 lehrt, zumindest einige der auf dem Autokennzeichen wiedergegebene Informationsflächen - beispielsweise mit der TÜV-Plakette - elektronisch ansteuerbar auszubilden. Ziel soll es sein, der Polizei ihre Überwachungsaufgabe zu erleichtern und einfacher zu erkennen, dass eine TÜV-Untersuchung erforderlich ist. Auch in der DE 18 55 643 U1 wird die besondere Ausbildung der Zahlen und Kennzeichen gelehrt, nämlich sie mit einer Leuchtfarbe zu versehen. Aus der DE 16 45 412 U1 ist schließlich zu entnehmen, dass die Oberfläche des Autokennzeichens durch eine Kunststofffolie o. Ä. abgedeckt werden soll, um das Abspringen der farblichen Teile, insbesondere der Ziffern und Zeichen zu vermeiden. Bei all diesen unterschiedlichen Vorschlägen ist nicht erkannt worden, dass für den Besitzer des Fahrzeuges durchaus das Interesse besteht, weitere Informationsflächen zur Verfügung zu haben, um auf sich bzw. seine Interessen aufmerksam zu machen. Dabei ist zu berücksichtigen, dass das Anbringen von Aufklebeschildern oder gar anderen Schildern auf dem Lackbereich des Fahrzeuges leicht zu Beschädigungen führt, so dass diese Vorgehensweise insbesondere bei teuren Fahrzeugen als völlig abwegig angesehen wird. In der US -A- 3 408 760 wird deshalb gelehrt, einen Träger mit Zusatz- oder Ergänzungsfläche über die Befestigungsmittel des Kennzeichens gleichzeitig an der Unterlegplatte und damit dem Fahrzeug festzulegen. Der Träger überragt die Unterlegplatte und das eigentliche Kennzeichen nach unten hin oder bei der US - A- 2 201 519 nach oben. Auch die US -A- 1 964 002 und die CA -A1-2 305 859 zeigen ähnliche Lösungen, während die BE -A3- 1 010 531 und JP 07 223 486 A spezielle Befestigungen des eigentlichen Kennzeichens offenbaren. Der Träger kann jedoch nur in einer vorbestimmten Stellung angebracht werden.

Der Erfindung liegt nun die Aufgabe zu Grunde, ein im zulässigen Rahmen individuell ergänzbares und in der Position veränderbares Autokennzeichen mit einem eine Zusatz- oder Ergänzungsfläche aufweisenden Träger zu schaffen.

Die Aufgabe wird gemäß der Erfindung durch die kennzeichnenden Merkmale des Anspruches 1 gelöst.

Bei einem derart ausgebildeten bzw. ergänzten Autokennzeichen ist für den Besitzer oder auch Fahrer die Möglichkeit gegeben, diese zusätzliche Ergänzungsfläche für seine Informations- und Identifikationsbedürfnisse zu nutzen, ohne die für andere Informationen frei zu haltende Nutzfläche des eigentlichen Kennzeichens zu beeinträchtigen. Vorteilhaft ist dabei weiter, dass auch die Lackflächen des gesamten Fahrzeuges durch das Aufkleben von irgendwelchen Informationsschildern oder Fahnenabbildungen nicht belastet zu werden brauchen, weil sowohl das an der Front wie auf der Rückseite des Fahrzeuges angebrachte Autokennzeichen entsprechend erweitert werden kann. Darüber hinaus ist im Endeffekt die Möglichkeit gegeben, diese Ergänzungsfläche unterhalb des eigentlichen Kennzeichens, neben oder oberhalb anzubringen, je nachdem wo es gerade zweckmäßig ist und wo es den Gesamteindruck optimiert. Natürlich besteht auch die Möglichkeit, mehrere derartiger zusätzlicher Ergänzungsflächen dem eigentlichen Kennzeichen zuzuordnen, um auf diese Art und Weise dem Eigentümer des Fahrzeugs die Möglichkeit zu geben, auch die unterschiedlichsten Informationen an die Allgemeinheit weiterzugeben. Da der Träger mit der Ergänzungsfläche von den Zulassungsbehörden akzeptiert worden ist, hat der Nutzer des Fahrzeuges bzw. der Besitzer auch keine Beanstandungen durch die Polizei oder andere Behörden zu befürchten. Die biegesteife Ausbildung sichert die Beibehaltung der vorgegebenen Position auch bei schnelleren Fahrten und Windbelastung, so dass die Wiedererkennbarkeit dieses Trägers mit Zusatz und Ergänzungsfläche immer gegeben ist. Dadurch dass der Träger einen mittig oder randseitig vorstehenden Befestigungsarm aufweist, ist die Möglichkeit gegeben, die eigentliche Ergänzungsfläche entweder beidseitig oder nur nach einer Seite vorstehen zu lassen, um so auch gezielt die Wirkung dieses Trägers zu beeinflussen. Die Ausbildung des Befestigungsarmes als Dreharm mit Rastsperre ermöglicht es, die Ergänzungsfläche oder Nutzfläche dadurch zu vergrößern, dass sowohl die Vorderseite wie die Rückseite dieses rechteckigen, runden, ovalen oder schuppenförmigen Flachteils wechselweise ausgenutzt werden kann. Über die Rastsperre ist sichergestellt, dass die vorgegebene Position auch bei Belastung durch Fahrwind erhalten bleibt und nur mit entsprechender Kraftaufwendung verändert werden kann.

Zweckmäßig verfügt der Träger über einen Befestigungsarm mit Bohrung und ist mit der Ergänzungsfläche einteilig ausgebildet ist. Träger und die zugeordnete Ergänzungsfläche bilden somit - wie bekannt - eine vorteilhaft stabile Einheit, die leicht anzubringen oder auch wieder zu entfernen ist, weil dazu ja lediglich das Lösen eines der Befestigungsmittel erforderlich wird. Die Bohrung im Befestigungsarm bringt nach Durchführung des entsprechenden Befestigungsmittels die notwendige Stabilität, wobei wegen der normierten Ausbildung des Kennzeichens insgesamt auch mit einer Ausbildung des Befestigungsarmes bzw. seiner Länge gearbeitet werden kann.

Weiter vorn ist darauf hingewiesen worden, dass der Träger mit der Ergänzungsfläche gerade für hochwertigere Fahrzeuge interessant ist, wobei dies noch dadurch unterstützt wird, dass der Träger mit Befestigungsarm und Ergänzungsfläche aus Edelstahl gefertigt ist. Zunächst einmal ist dadurch eine hohe Biegesteifigkeit gewährleistet, darüber hinaus wirkt sich diese Ausbildung auch werterhöhend und resistent gegenüber Schmutz und Feuchtigkeit aus.

Die Abgrenzung gegenüber der Umgebung bleibt durch den Rand dadurch unterstützt, dass der Rand und die Nutzfläche mit einer schrillfarbigen Beschichtung versehen sind. Bei Ausnutzung der Nutzfläche wird diese natürlich abgedeckt, der Rand aber behält seine besondere Wirkung.

Um Verletzungen durch den Träger mit Befestigungsarm und Ergänzungsfläche weitestgehend auszuschließen, ist vorgesehen, dass der Rand bzw. die Kante der Nutzfläche rundum abgerundet ausgeführt ist. Darüber hinaus soll auch der Befestigungsarm abgerundete Kanten aufweisen. Somit ist auch dann eine Verletzungsgefahr vermieden, wenn dünnwandigere Träger zum Einsatz kommen sollten. In der Regel aber wird schon auch wegen der notwendigen Biegesteifigkeit eine Stärke der Wandung von 4 - 5 mm erforderlich sein. Die "Entschärfung" der Kanten hat aber auch optische Vorteile, so dass diese gerundeten Kanten auf jeden Fall vorteilhaft sind.

Zur Unterstützung der Wirkung dieses Trägers mit Befestigungsarm und Ergänzungsfläche kann es zweckmäßig sein, dem Befestigungsarm eine die Ergänzungsfläche bzw. nur die Nutzfläche anstrahlende Beleuchtung zuzuordnen. Diese zusätzliche Beleuchtung kann dauerhaft sein oder es besteht natürlich auch die Möglichkeit, sie an die allgemeine Fahrzeugbeleuchtung anzukoppeln, um so bei schlechter Sicht oder Dunkelheit die Nutzfläche anzustrahlen.

Insbesondere bei einem unter dem eigentlichen Kennzeichen angebrachten Träger kann es zweckmäßig sein, den Befestigungsarm teleskopierbar auszubilden. Damit kann der Überstand über die Kennzeichenplatte verändert werden, ohne dass der Fahrer sein Fahrzeug verlassen muss. Denkbar ist es auch, dem Befestigungsarm einen Antrieb zuzuordnen, über den der Befestigungsarm entweder verlängert oder verkürzt wird, um so beispielsweise beim Einfahren oder Ausfahren aus der Garage ein Aufsetzen oder eine Berührung des Bodens zu vermeiden. Auch hier sollte dieser kleine Motor vom Fahrzeuginneren her zu betätigen sein.

Die Erfindung zeichnet sich insbesondere dadurch aus, ein Autokennzeichen ohne direkte Beeinflussung der Form und Größe so zu gestalten, dass es dem Bedürfnis des Besitzers oder Fahrers nach Anbringung zusätzlicher Informationen voll genügt. Er kann beispielsweise seinen Namen auf der zusätzlich geschaffenen Nutzfläche anbringen oder insbesondere auch die Nationalflagge oder die Farben seines Fußballvereins, um so der Allgemeinheit kundzutun, welche Interessen und Absichten er verfolgt. Insbesondere kann aber auf diese Art und Weise dem Bedürfnis der Menschen entsprochen werden, seine Identität mit dem Fahrzeug in irgendeiner Form zu verbinden, wobei die Information durch Drehen oder andere Positionierung des Informationsträgers ergänzt bzw. einfach verändert werden kann.

Weitere Einzelheiten und Einzelteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist.

Es zeigen:
- Figur 1: ein Fahrzeug mit Autokennzeichen und Träger mit zusätzlicher Ergänzungsfläche,
- Figur 2: eine vergrößerte Wiedergabe eines Autokennzeichens mit zugeordneter Ergänzungsfläche,
- Figur 3: den Träger mit Befestigungsarm und Ergänzungsfläche in vergrößerter Wiedergabe,
- Figur 4: einen Schnitt durch die Ergänzungsfläche,
- Figur 5: einen Schnitt durch die Ergänzungsfläche mit dem anschließenden Befestigungsarm,
- Figur 6: eine schuppenförmig ausgebildete Ergänzungsfläche und
- Figur 7: eine kreisförmig ausgebildete Ergänzungsfläche

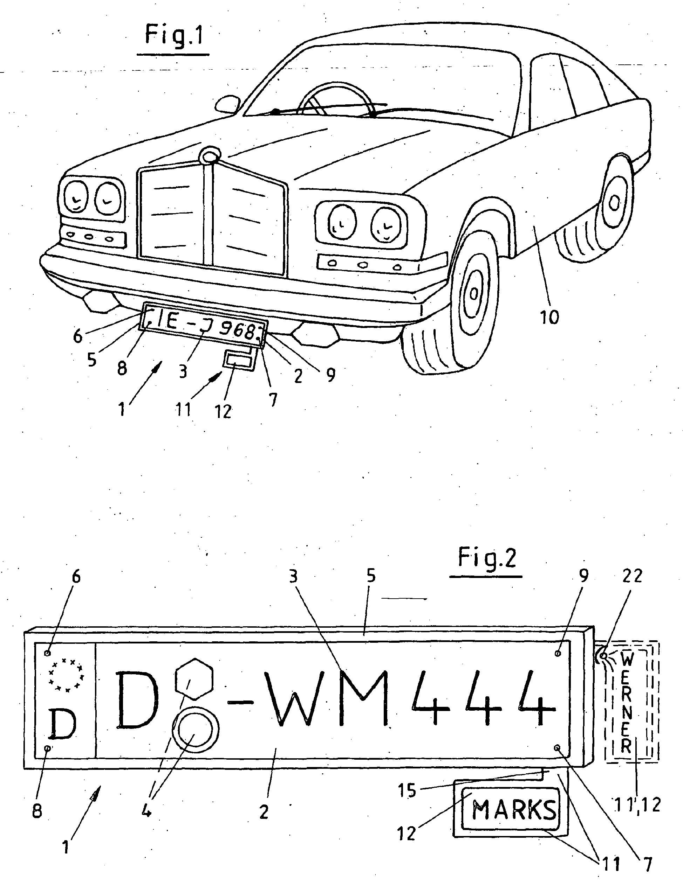

Fig. 1 zeigt ein Fahrzeug 10, an dessen Frontfläche ein Autokennzeichen 1 angebracht ist. Unterhalb der Kennzeichenplatte 2 ist ein Träger 11 mit Ergänzungsfläche 12 vorgesehen.

Das in Fig. 1 wiedergegebene Autokennzeichen 1 weist ebenso wie das in Fig. 2 wiedergegebene Autokennzeichen 1 eine Beschriftung 3, Stempel 4 und beispielsweise hier das Kennzeichen Europa mit den im Kreis angeordneten Sternen. Diese Kennzeichenplatte 2 des Autokennzeichens 1 ist auf einer Unterlegplatte 5 angebracht, die mit dem Fahrzeug 10 fest oder lösbar verbunden ist. Kennzeichenplatte 2 und Unterlegplatte 5 jedenfalls sind über Befestigungsmittel 6, 7, 8, 9 lösbar miteinander verbunden, d. h. es handelt sich in der Regel um Schrauben, die nach dem Herausschrauben die Möglichkeit geben, die Kennzeichenplatte 2 abzunehmen.

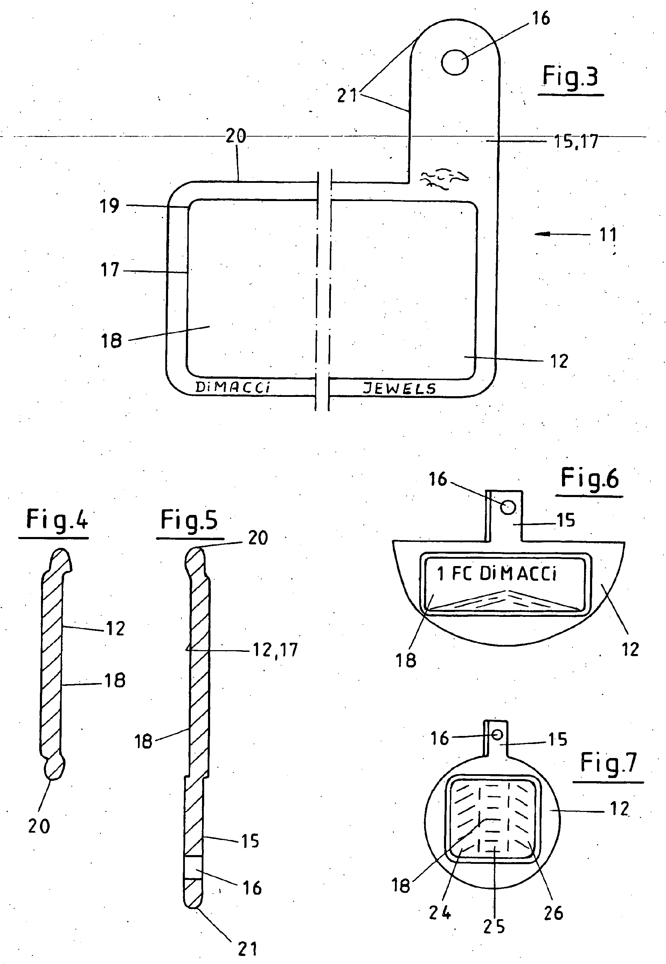

Der Kennzeichenplatte 2 sind sowohl bei der Darstellung nach Fig. 1 wie nach Fig. 2 Träger 11, 11' zugeordnet, die eine Ergänzungsfläche 12 aufweisen. Auf dieser Ergänzungsfläche 12 ist eine Nutzfläche 18 vorgegeben, die von einem erhöhten Rand 19 umgeben ist. Die Kanten 20 dieses Randes 19 sind abgerundet, wie den Fig. 4 und 5 entnommen werden kann, um Verletzungen von vornherein auszuschließen.

Bei der Darstellung nach Fig. 2 ist der Träger 11 über das Befestigungsmittel 7 mit festgelegt, der Träger 11' über das Befestigungsmittel 9. Durch einfaches Lösen dieser Befestigungsmittel 7, 9 können dann die Träger 11 mit Ergänzungsfläche 12 abgenommen und für andere Zwecke benutzt werden bzw. zur Anbringung besonderer Kennzeichnungsmittel, beispielsweise Farben oder wie hier wiedergegeben Namen. Dabei besteht die Möglichkeit, die Nutzfläche 18 durch eine Beleuchtung 22 anzustrahlen, um so die Aufmerksamkeit für dieses besonders ausgebildete Autokennzeichen 1 zu erhöhen.

Fig. 3 zeigt einen entsprechenden Träger 11 in vergrößerter Wiedergabe, wobei die Größe der Ergänzungsfläche 12 nicht genau vorgegeben ist. Vielmehr ist angedeutet, dass diese variabel ist, insbesondere in der Längserstreckung. Erkennbar ist hier, dass der Träger 11 über die Ergänzungsfläche 12 und einen Befestigungsarm 15 verfügt, in dem eine Bohrung 16 ausgebildet ist. Wie in Fig. 3 und auch den Fig. 6 und 7 dargestellt, ist der Befestigungsarm 15 als Flachteil 17 ausgebildet, so dass die Möglichkeit besteht, wie in Fig. 2 verdeutlicht, dieses Flachteil 17 zwischen Kennzeichenplatte 2 und Unterlegplatte 5 anzuordnen und dann einfach über das Befestigungsmittel 7 oder auch 9 festzulegen.

Der Rand 19 ist wie erläutert erhöht ausgebildet und kann mit einer Warnfarbe beschichtet sein, um so die Aufmerksamkeit zu erhöhen. Die Nutzfläche 18 ist dann etwas zurückgesetzt verwirklicht, wobei im dargestellten Beispiel auf der Rückseite sich dann die umgekehrte Ausbildung ergibt. Da diese Rückseite aber in der Regel nicht benutzt wird, ist die durch die Herstellungsweise vorgegebene Ausbildung des Randes 19 und der Nutzfläche 18 vorteilhaft. Auch die Kante 21 ist wie die Kante 20 abgerundet, um Verletzungen auszuschließen.

Nach Fig. 6 ist die Nutzfläche 18 dazu benutzt worden, um auf den Lieblingsfußballverein des Fahrzeughalters aufmerksam zu machen. Bei der Ausbildung nach Fig. 7 ist zusätzlich zu der Veränderung der Schuppenform in eine Kreisform die Nutzfläche 18 hier benutzt, um auf eine Nationalitätsflagge, bestehend aus mehreren Farben 24, 25, 26 hinzuweisen. Die hier wiedergegebenen Beispiele stellen nur einige der Möglichkeiten dar. Das Autokennzeichen kann durch ähnlich ausgebildete Befestigungsarme 15 und Ergänzungsflächen 12 bzw. Träger 11 auch ergänzt werden.

## Patentansprüche

1. Autokennzeichen in normierter und vorgeschriebener Form, Größe und Beschriftung (3), das direkt, vor allem aber über eine Unterlegplatte (5) mit dem Fahrzeug (10) über randseitige Befestigungsmittel (6 - 9) lösbar verbunden ist, wobei mindestens eines der Befestigungsmittel (7) zugleich auch zur Fixierung eines Trägers (11) mit einer Zusatz- oder Ergänzungsfläche (12) dient,
**dadurch gekennzeichnet,**
**dass** der in sich biegesteif ausgebildete Träger (11) einen mittig oder randseitig vorstehenden Befestigungsarm (15) aufweist, der als Dreharm mit Rastsperre ausgeführt ist.

2. Autokennzeichen nach Anspruch 1,
**dadurch gekennzeichnet,**
**dass** die Ergänzungsfläche (12) als rechteckiges, rundes, ovales oder schuppenförmiges Flachteil (17) ausgebildet ist, das einen die eigentliche Nutzfläche (18) umgebenden, erhöhten Rand (19) mit kanten (20) aufweist.

3. Autokennzeichen nach Anspruch 1 oder 2,
**dadurch gekennzeichnet,**
**dass** der Träger (11) mit Befestigungsarm (15) und Ergänzungsfläche (12) aus Edelstahl gefertigt ist.

4. Autokennzeichen nach Anspruch 2 oder 3,
**dadurch gekennzeichnet,**
**dass** der Rand (19) und die Nutzfläche (18) mit einer schrillfarbigen Beschichtung versehen sind.

5. Autokennzeichen nach einem der Ansprüche 2 bis 4,
**dadurch gekennzeichnet,**
**dass** der Rand (19) bzw. die Kante (20) der Nutzfläche (18) rundum abgerundet ausgeführt ist.

6. Autokennzeichen nach einem der vorhergehenden Ansprüche,
**dadurch gekennzeichnet,**
**dass** der Befestigungsarm (15) abgerundete Kanten (21) aufweist.

7. Autokennzeichen nach einem der vorhergehenden Ansprüche,
**dadurch gekennzeichnet,**
**dass** dem Befestigungsarm (15) eine die Ergänzungsfläche (12) bzw. nur die Nutzfläche (18) anstrahlende Beleuchtung (22) zugeordnet ist.

8. Autokennzeichen nach einem der vorhergehenden Ansprüche,
**dadurch gekennzeichnet,**
**dass** der Befestigungsarm (15) teleskopierbar ausgebildet ist.

## Claims

1. A car licence plate of standardised and prescribed shape, size and inscription (3), which is detachably connected to the vehicle (10) directly, but in particular via a backing plate (5) by means of marginal fasteners (6 - 9), at least one of the fasteners (7) at the same time also serving to fix a holder (11) having an additional or supplementary face (12),
**characterized in that,**
the deflection resistant holder (11) comprises a centrally or marginally projecting fixing arm (15), which is embodied as a rotating arm with a detent catch.

2. The car licence plate according to Claim 1,
**characterized in that,**
the supplementary face (12) in embodied as a rectangular, circular, oval or lamellar flat part (17), which has a raised rim (19) with edges (20) enclosing the actual useable face (18).

3. The car licence plate according to Claim 1 or 2,
**characterized in that,**
the holder (11) with fixing arm (15) and supplementary face (12) is made of stainless steel.

4. The car licence plate according to Claim 2 or 3,
**characterized in that,**
the rim (19) and the useable face (18) are provided with a stridently coloured coating.

5. The car licence plate according to any one of Claims 2 to 4,
**characterized in that,**
the rim (19) and/or the edge (20) of the useable face (18) are radiused all the way round.

6. The car licence plate according to any one of the preceding claims,
**characterized in that,**
the fixing arm (15) has radiused edges (21).

7. The car licence plate according to any one of the preceding claims,
**characterized in that,**
an illumination (22) lighting the supplementary face (12) or just the useable face (18) is assigned to the fixing arm (15).

8. The car licence plate according to any one of the preceding claims,
**characterized in that,**
the fixing arm (15) is of telescopic design.

## Revendications

1. Plaque minéralogique de forme, taille et inscription (3) normées et prescrites qui est reliée de manière amovible directement, mais surtout par l'intermédiaire d'une plaque de base (5) avec le véhicule (10) via des moyens de fixation (6 - 9) en bordure, étant donné qu'au moins un des moyens de fixation (7) sert en même temps à la fixation d'un support (11) avec une surface supplémentaire ou une surface complémentaire (12),
**caractérisée en ce que**
le support (11) en soi raide à la flexion présente un bras de fixation (15) faisant saillie au centre ou sur les bords qui est réalisé comme bras rotatif avec dispositif d'arrêt à encliquetage.

2. Plaque minéralogique selon la revendication 1,
**caractérisée en ce que**
la surface complémentaire (12) est réalisée comme partie plate (17) rectangulaire, ronde, ovale ou imbriquée qui présente un bord relevé (19) avec arêtes (2) qui entoure la surface utile (18) proprement dite.

3. Plaque minéralogique selon la revendication 1 ou 2,
**caractérisée en ce que**
le support (11) est fabriqué avec un bras de fixation (15) et une surface complémentaire (12) en acier spécial.

4. Plaque minéralogique selon la revendication 2 ou 3,
**caractérisée en ce que**
le bord (19) et la surface utile (18) sont revêtus d'une couche de couleur vive.

5. Plaque minéralogique selon l'une quelconque des revendications 2 à 4,
**caractérisée en ce que**
le bord (19) ou l'arête (20) de la surface utile (18) sont arrondis sur tout le pourtour.

6. Plaque minéralogique selon l'une quelconque des revendications précédentes,
**caractérisée en ce que**
le bras de fixation (15) présente des arêtes arrondies (21).

7. Plaque minéralogique selon l'une quelconque des revendications précédentes,
**caractérisée en ce que**
est affecté au bras de fixation (15) un éclairage (22) qui est orienté sur la surface complémentaire (12) ou seulement sur la surface utile (18).

8. Plaque minéralogique selon l'une quelconque des revendications précédentes,
**caractérisée en ce que**
le bras de fixation (15) est télescopique.
